# EUROPEAN PATENT APPLICATION

(11) **EP 0 748 961 A1**
(43) Date of publication of application: **18.12.1996**
(21) Application number: 96109514.8
(22) Date of filing: 13.06.1996
(51) Int. Cl.: F16H 61/18

(54) **Vehicle gearbox control device featuring a selection position disabling assembly**

(30) Priority: 16.06.1995 IT TO950507
(71) Applicant: ROLTRA MORSE S.p.A., I-86077 Pozzilli (IT)
(72) Inventor: Bravo, Ernesto, 10020 Cambiano (IT)
(74) Representative: Franzolin, Luigi

(57) **Abstract**

A vehicle gearbox control device (1) presenting a support (2) fitted to the vehicle body; a control lever (5) molded in one piece from plastic material and movable in relation to the support into a number of selection positions; and an assembly (54) for disabling a selection position (R), and in turn presenting a control element (55) assembled to the control lever (5) transversely to the longitudinal axis (D) of the lever (5), and slidable along the control lever (5) between a disabling position wherein it cooperates with a stop (8a) on the support (2), and a raised enabling position permitting the control lever (5) to be moved into the selection position.

## Description

The present invention relates to a vehicle gearbox control device, or more specifically to a gearshift control device.

Known gearshift control devices comprise a support fitted to the vehicle body, and a control lever fitted to and movable in relation to the support into a number of selection positions. The control lever normally comprises a tubular metal rod fitted at the top end with a grip, and the bottom end of which is fitted rigidly, e.g. welded, with one or more mechanical elements for connection to the other members of the device.

Control devices are also known which feature an assembly for disabling one of the selection positions, to prevent the relative gear (typically the reverse gear) from being engaged accidentally.

In one known embodiment, the disabling assembly comprises a tubular sleeve coaxial with the control lever rod, and which slides along the rod between a lowered or disabling position and a raised or enabling position. The sleeve presents an upper control portion close to the control lever grip; and a lower stop portion which, in the lowered position, interacts with a respective stop integral with the control lever support to prevent the control lever from being shifted into the disabled selection position.

Known devices of the type briefly described above present several drawbacks.

In particular, the sleeve must be fitted axially onto the control lever rod, which means the lever must be formed in a number of removable parts, thus complicating and increasing the cost of manufacturing and assembling the device.

It is an object of the present invention to provide a gearshift control device designed to overcome the aforementioned drawback typically associated with known devices.

According to the present invention, there is provided a vehicle gearbox control device comprising:
supporting means fitted to the vehicle body;
a control lever secured to said supporting means so as to move between a number of operating positions; and
a disabling assembly comprising a control element fitted to said control lever and presenting a stop portion; and a stop element for said stop portion of said control element, and located on said supporting means; said control element being movable, along the longitudinal axis of said control lever, between a disabling position wherein said stop portion interacts with said stop element to prevent said control lever from being moved into a predetermined operating position, and an enabling position wherein said stop portion does not interact with said stop element;
characterized in that it comprises retaining means for securing said control element to said control lever, and enabling said control element to be assembled to said control lever transversely to said longitudinal axis of the control lever.

Known gearshift control devices are also complex and of considerable weight.

According to a preferred embodiment of the present invention, the control lever is formed in one piece from plastic material.

Two preferred, non-limiting embodiments of the present invention will be described by way of example with reference to the accompanying drawings, in which:
Figure 1 shows a side view of a gearshift control device in accordance with the teachings of the present invention;
Figure 2 shows a partially sectioned front view of the Figure 1 device;
Figure 3 shows a partial opposite side view of the Figure 1 device;
Figure 4 shows a section along line IV-IV in Figure 1;
Figure 5 shows a section along line V-V in Figure 1;
Figure 6 shows a section along line VI-VI in Figure 1;
Figure 7 shows a section along line VII-VII in Figure 1;
Figure 8 shows a larger-scale side view of a detail of the Figure 1 device;
Figure 9 shows a front view of the Figure 1 detail;
Figure 10 shows a plan view of a detail of the Figure 1 device;
Figure 11 shows a side view of a second embodiment of the present invention;
Figure 12 shows a section along line XII-XII of the Figure 11 device;
Figure 13 shows a section along line XIII-XIII of the Figure 11 device;
Figure 14 shows a section along line XIV-XIV of the Figure 11 device;
Figure 15 shows a section along line XV-XV of the Figure 11 device.

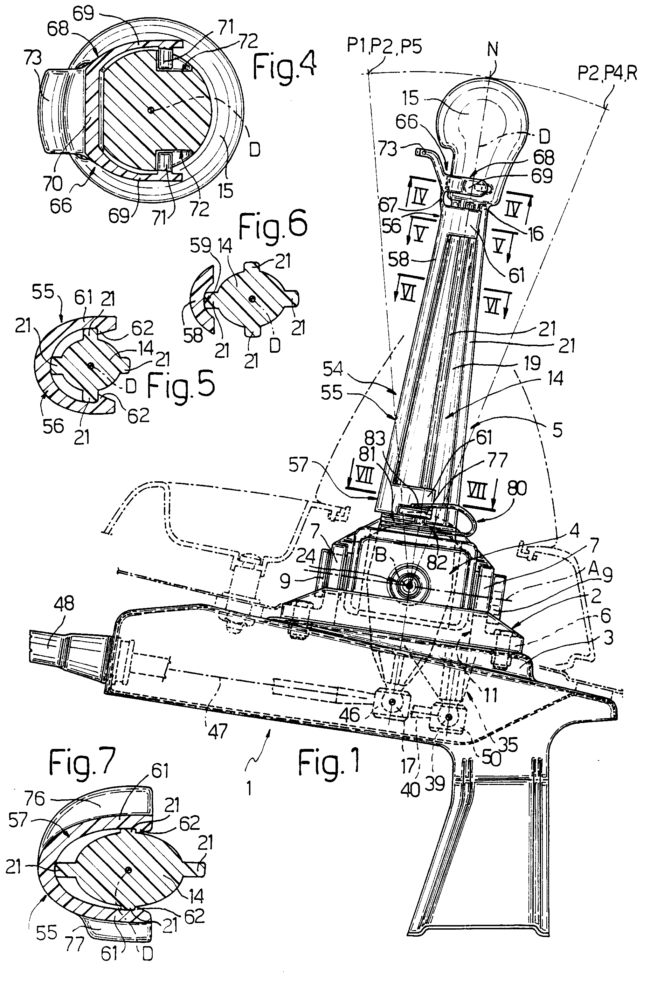

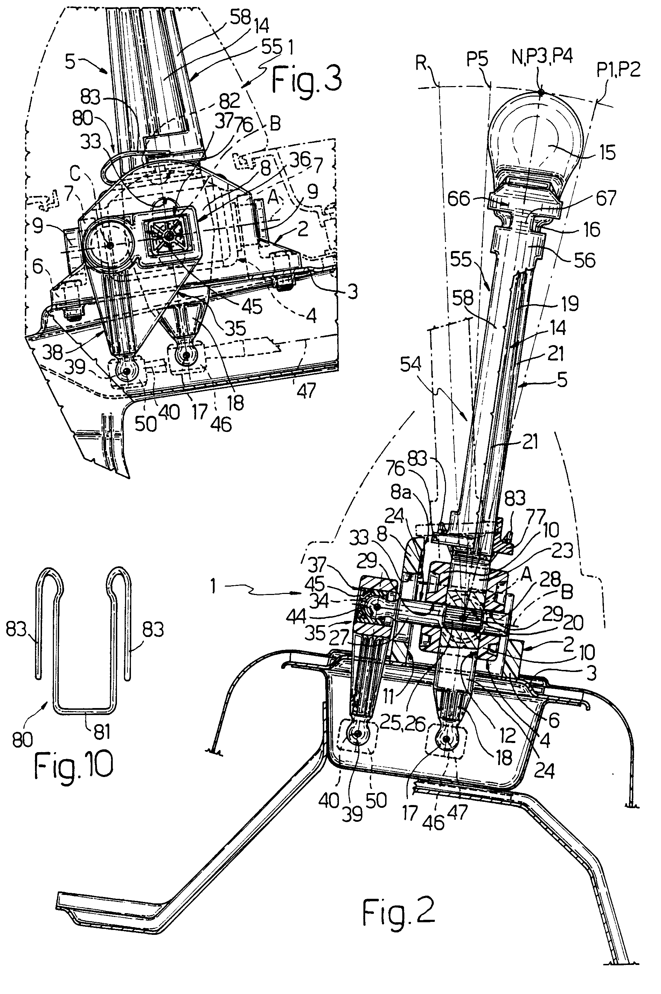

Number 1 in Figures 1 and 2 indicates a control device for a vehicle gearbox (not shown).

Device 1 substantially comprises a fixed support 2 fitted rigidly to a vehicle body element 3; an intermediate element 4 rotatable in relation to support 2 about a first axis A; and a control lever 5 fitted to intermediate element 4 and rotatable in relation to it about a second axis B perpendicular to axis A.

Lever 5 is thus rotatable, in relation to fixed support 2, about axis A (fixed) and axis B (movable with intermediate element 4); axis A is substantially longitudinal in relation to the vehicle, and rotation about it provides for selecting the gears; axis B is crosswise to the vehicle, and rotation about it by lever 5 provides for engaging or disengaging the gears; and operation of lever 5 is transmitted to the gearbox (not shown) by linkage means described later on.

Support 2 presents a substantially frame-like anchoring base 6 defining a central opening 11, and from which respective walls 7 extend upwards from the front and rear sides, and a lateral wall 8 extends upwards from one longitudinal side; the top inner edge 8a of lateral wall 8 defining a stop surface for the purpose described later on.

Intermediate element 4 is substantially parallelepiped, and is housed between and hinged to walls 7 by respective end pins 9 of axis A.

Support 2 and intermediate element 4 are conveniently molded from plastic material.

Intermediate element 4 presents a longitudinal through opening 12 perpendicular to axes A and B, defined laterally by two parallel lateral walls 10 of intermediate element 4, and presenting a cross section (in a plane parallel to axes A and B) in the form of an elongated rectangle extending in the direction of axis A.

Lever 5 is molded in one piece from plastic material, and comprises a rod 14, of axis D, fitted through opening 12 in intermediate element 4; a grip 15 integral with the top end 16 of rod 14; and a spherical articulating head 17 extending from the bottom end 18 of rod 14, and for connecting rod 14 to an engagement control cable 47, as described later on.

Rod 14 comprises a substantially elliptical-section top portion 19 tapering towards grip 15 (Figures 5 to 7) and presenting longitudinal cross ribs 21 extending along the generating lines defined by the longitudinal and transverse planes of symmetry of portion 19. Rod 14 also comprises a substantially rectangular-section bottom portion 23 housed in sliding manner with a small amount of lateral clearance inside opening 12, and presenting a transverse through hole 20, of axis B, defining a seat for a pin 24 permitting rod 14 to pivot in relation to intermediate element 4 (Figure 2).

Pin 24 presents an intermediate portion 25 with grooves 26, which is interference fitted inside hole 20 so that it is rigidly connected to lever 5; and axial end portions 27, 28 engaging in radially slack manner respective holes 29, of axis B, formed in the lateral walls 10 of intermediate element 4.

One (27) of the two axial end portions extends axially outwards of intermediate element 4 and beyond lateral wall 8 of support 2 - which, for the purpose, presents a vertically elongated opening 33 - to form a spherical end head 34 which acts as an articulating element for controlling a linkage lever 35.

Lever 35 is made of plastic material, is substantially square, and is hinged to lateral wall 8 of support 2 to pivot about an axis C (Figure 3) perpendicular to axis A, crosswise to the vehicle, and shifted rearwards in relation to axis B. Lever 35 presents an arm 36 extending frontwards in a substantially longitudinal direction in relation to the vehicle, and connected to head 34 of pin 24 by an articulating element 37; and an arm 38 extending substantially downwards, and presenting a spherical end head 39 for connection to a gear selection control cable 40 as described later on.

Articulating element 37 comprises a parallelepiped block of plastic material with a low friction coefficient, and presenting a spherical seat 44 cooperating with head 34 of pin 24. Block 37 is housed in sliding manner inside an opening 45 in arm 36, and is permitted to move axially and radially in relation to axis C, but with no tangential slack in relation to it.

Spherical head 17 of lever 5 cooperates in known manner with an articulating element 46 (shown by the dotted line in Figures 1, 2, 3) presenting a complementary spherical seat, and fitted to one end of engagement control cable 47. Cable 47 is a Bowden cable, and presents a sheath 48 with one end fitted to vehicle body element 3 and substantially parallel to axis A.

Similarly, spherical head 39 of linkage lever 35 cooperates with an articulating element 50 (shown by the dotted line in Figures 1, 2, 3) presenting a complementary spherical seat, and fitted to one end of selection control cable 40. Cable 40 is a Bowden cable, and presents a sheath (not shown) with one end fitted to vehicle body element 3 and also substantially parallel to axis A.

Device 1 comprises a reverse gear selection disabling assembly 54 for preventing accidental engagement of the reverse gear.

Assembly 54 substantially comprises a control element 55 fitted to rod 14 of control lever 5, and slidable in relation to rod 14 in a direction substantially parallel to the longitudinal axis D of the rod.

According to the present invention, control element 55 is snapped onto rod 14 transversely to axis D, for which purpose it presents a pair of retaining portions 56, 57 which snap onto ribs 21 of rod 14. Control element 55 is conveniently molded in one piece from plastic material.

More specifically, control element 55 comprises an elongated, curved-section main body 58 (Figure 3) with its concave surface 59 resting on the front rib 21 of rod 14. Retaining portions 56, 57 are located respectively at the top and bottom ends of body 58, present a C-shaped cross section, and each comprise a pair of flexible arms 61 extending from opposite sides of body 58 and presenting respective inner end teeth 62 which snap onto respective lateral ribs 21 of rod 14 (Figures 5 and 7).

Control element 55 comprises an integral operating lever 66 located close to grip 15 of lever 5 and secured integrally to top retaining portion 56 of body 58 by a flexible blade 67.

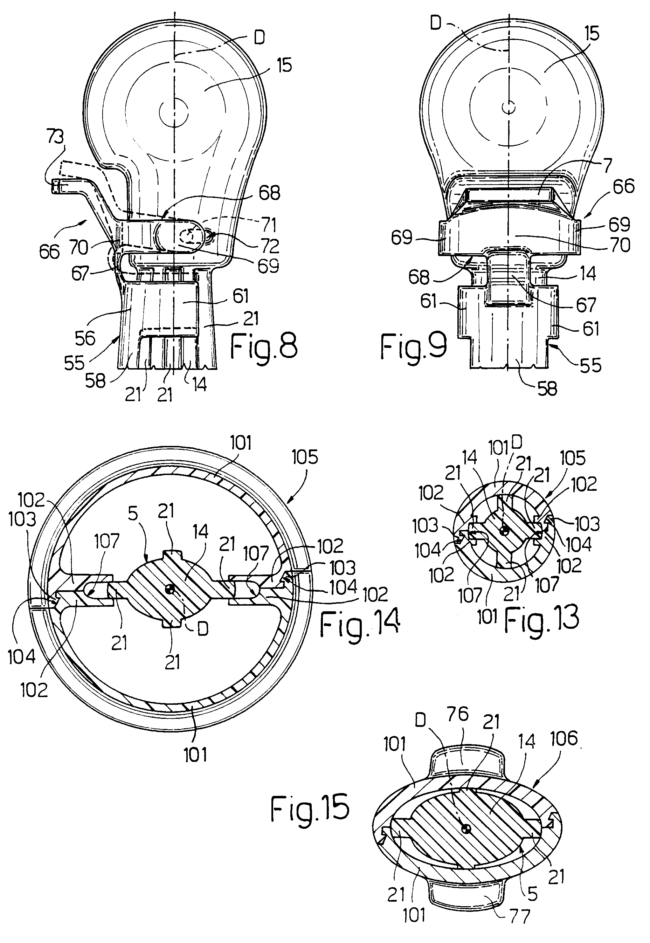

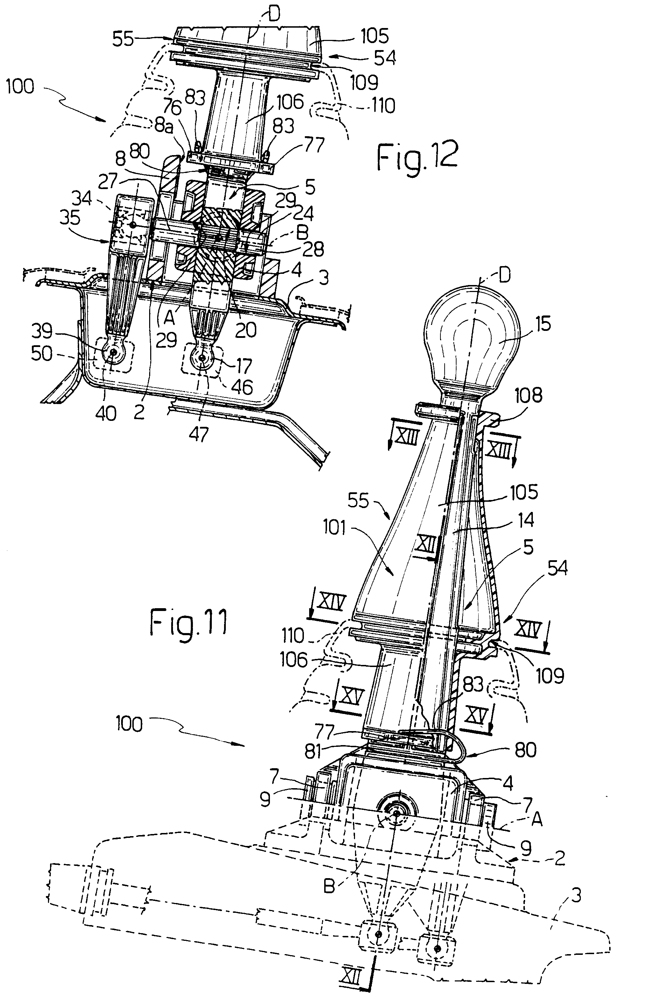

Operating lever 66 (Figures 8 and 9) comprises a C-shaped connecting portion 68 presenting a pair of flexible lateral arms 69 extending from an intermediate front portion 70 to which blade 67 is connected, and which present respective inner end pins 71 which snap inside respective seats 72 formed on either side of the base of grip 15. Seats 72 are elongated in a direction perpendicular to axis D of rod 14 and parallel to the longitudinal plane of symmetry of control lever 5.

Operating lever 66 also comprises a trigger 73 projecting frontwards and upwards from intermediate portion 70 of lever 66, so that it may be finger operated without removing the hand from grip 15 of control lever 5.

Control element 55 presents a pair of appendixes 76, 77 projecting laterally outwards from respective arms 61 of bottom retaining portion 57 (Figure 7).

Disabling assembly 54 also comprises a return spring 80 (Figure 10) which acts on control element 55 to keep it in the lowered or disabling position shown in Figures 1 and 2. More specifically, spring 80 comprises a flat, substantially U-shaped intermediate anchoring portion 81 which snaps inside a peripheral groove 82 formed in bottom portion 23 of rod 14 of lever 5; and respective curved arms 83 extend upwards from opposite ends of portion 81, are bent downwards on either side of portion 81, and rest on lateral appendixes 76, 77 to exert downward pressure on control element 55.

Device 1 operates as follows.

To select a given gear, grip 15 of control lever 5 is shifted laterally (Figure 2) to rotate lever 5, pin 24 integral with lever 5, and intermediate element 4 about axis A; the rotation of pin 24 about axis A crosswise to it produces an upward or downward movement, along an arc of a circle, of spherical head 34 which, via articulating element 37, transmits the movement to linkage lever 35; and lever 35 rotates about axis C to activate relative cable 40 to shift the relative selection members inside the gearbox. The selection positions relative to a five-speed plus reverse gearbox are shown in Figure 2, in which the numbers preceded by the letter P indicate the corresponding gears, N indicates the neutral position, and R the reverse gear.

Once the required selection position is reached, the relative gear is engaged by moving grip 15 of lever 5 forwards or backwards to rotate lever 5 about axis B and so activate cable 47. The neutral and engaged positions in Figure 1 are indicated using the same references as in Figure 2.

Assembly 54 provides for preventing accidental selection (and engagement) of the reverse gear. More specifically, if control lever 5 is shifted to reverse position R without first operating control element 55, appendix 76 of element 55 contacts edge 8a of lateral wall 8 of support 2, thus preventing the reverse position from being engaged (Figure 2).

To shift into reverse, the driver must first raise trigger 73 of lever 66 of control element 55 into the position shown by the dotted line in Figure 8, to rotate lever 66 about the pivot defined by pins 71, and, via flexible blade 67, raise main body 58 of control element 55 in opposition to spring 80.

As shown by the dotted line in Figure 2, appendix 76 is thus positioned over edge 8a of lateral wall 8 of support 2, thus enabling control lever 5 to be rotated into the reverse selection position, at which point the gear is engaged as described above.

Figures 11 and 12 show an alternative embodiment 100 of the present invention, which is described below only insofar as it differs from device 1, and using the same numbering system for parts similar or corresponding to those described with reference to Figures 1 to 10.

Device 100 in Figures 11 and 12 differs from device 1 solely as regards reverse gear selection disabling assembly 54.

Assembly 54 of device 100 comprises a tubular control element 55 in turn comprising two identical half shells 101 enclosing and fitted to either side of rod 14 transversely to axis D, and which mate at respective edges 102 substantially along a plane defined by axes A and D.

Half shells 101 snap onto each other, for which purpose they present a serrated-section retaining rib 103 extending along one edge 102, and a corresponding seat 104 formed along the opposite edge 102, so that rib 103 of one half shell 101 engages seat 104 in the other.

Tubular control element 55 comprises a circular-section top portion 105 (Figures 13 and 14) flaring downwards into a bell (Figure 11); and an elliptical-section bottom portion 106 (Figure 15) enclosing rod 14 and substantially contacting ribs 21.

Top portion 105 presents inner guide grooves 107 formed between the contacting edges 102 of half shells 101, and engaged in sliding manner by the front and rear ribs 21 of rod 14.

An annular operating collar 108 extends from the top end of portion 105, close to grip 15 of lever 5.

From the bottom end of portion 106, two appendixes 76, 77, identical to those of device 1, extend laterally and are acted on by return spring 80; and appendix 76 interferes with edge 8a of lateral wall 8 of support 2 as described above in connection with device 1.

About the base of top portion 105 of element 55, an annular groove 109 is formed for securing the top of a bellows 110 (shown partly by the dotted line in Figure 11) for covering and protecting the articulating parts of device 100.

Device 100 operates in exactly the same way as device 1, except that, in this case, control element 55 is operated by means of collar 108.

The advantages of the gearshift control devices according to the present invention will be clear from the foregoing description.

In particular, control element 55 of disabling assembly 54 may be fitted to rod 14 of lever 5 transversely to lever axis D, thus eliminating any geometric restrictions in the formation of lever 5, and in particular, enabling it to be formed in one piece. According to a preferred embodiment of the invention, the control lever is molded from plastic material, which enables the formation of relatively complex shapes and, hence, provides for integrally forming parts which, in known devices, would be made separately and then assembled, e.g. grip 15, spherical head 17 for connection to cable 47, seat 20 for hinge pin 24.

The present invention therefore provides for simplifying manufacture and assembly, reducing overall cost, and greatly reducing the weight of lever 5.

The overall weight of device 1 is further reduced by also using plastic material for the other main parts of the device (support 2, intermediate element 4 and linkage lever 35).

Clearly, changes may be made to devices 1 and 100 as described and illustrated herein without, however, departing from the scope of the present invention.

In particular, control lever 5 may be connected to support 2 in any other way, e.g. by means of a ball joint; and disabling assemblies 54 may be applied to automatic gearbox control devices to prevent inadvertent selection of a given operating mode of the gearbox.

## Claims

1. A vehicle gearbox control device (1; 100) comprising:
supporting means (2) fitted to the vehicle body;
a control lever (5) secured to said supporting means (2) so as to move between a number of operating positions; and
a disabling assembly (54) comprising a control element (55) fitted to said control lever (5) and presenting a stop portion (76); and a stop element (8a) for said stop portion (76) of said control element (55), and located on said supporting means (2); said control element (55) being movable, along the longitudinal axis (D) of said control lever (5), between a disabling position wherein said stop portion (76) interacts with said stop element (8a) to prevent said control lever (5) from being moved into a predetermined operating position (R), and an enabling position wherein said stop portion (76) does not interact with said stop element (8a);
characterized in that it comprises retaining means (21; 61, 62; 103, 104) for securing said control element (55) to said control lever (5), and enabling said control element (55) to be assembled to said control lever (5) transversely to said longitudinal axis (D) of the control lever (5).

2. A device as claimed in Claim 1, characterized in that said control lever (5) is molded in one piece from plastic material, and comprises, integrally, a rod (14), connecting means (20) for connecting said rod (14) to said supporting means (2), and a grip (15) integral with the top end (16) of said rod (14).

3. A device as claimed in Claim 1 or 2, characterized in that said control lever (5) comprises, integrally, guide means (21) for guiding said control element (55) between said disabling position and said enabling position.

4. A device as claimed in Claim 3 dependent on Claim 2, characterized in that said guide means comprise a number of longitudinal ribs (21) formed along said rod (14) of said control lever (5).

5. A device as claimed in any one of the foregoing Claims, characterized in that said retaining means comprise snap-on assembly means (21; 61, 62; 103, 104).

6. A device as claimed in Claim 5 dependent on Claim 4, characterized in that said snap-on assembly means comprise a number of retaining teeth (62) which snap onto said ribs (21) of said rod (14).

7. A device as claimed in Claim 6, characterized in that said control element (55) comprises an elongated, curved-section main body (58) presenting said retaining teeth (62) and said stop portion (76); the concave surface (59) of said main body (58) cooperating with said control lever (5).

8. A device as claimed in any one of the foregoing Claims from 2 to 7, characterized in that said control element (55) comprises an operating lever (66) for activating said main body (58) and located close to said grip (15) of said control lever (5).

9. A device as claimed in Claim 8, characterized in that said operating lever of said control element (55) is substantially hinged at one end to said control lever (5), and comprises a manually operated portion (73), and an intermediate portion (70) for connection to said main body (58).

10. A device as claimed in Claim 9, characterized in that said intermediate portion (70) of said operating lever (66) is connected integral with said main body (58) by a flexible blade (67).

11. A device as claimed in any one of the foregoing Claims from 1 to 5, characterized in that said control element (55) comprises two half shells (101) fitted to either side of said control lever (5) to enclose at least a portion (14) of the control lever (5).

12. A device as claimed in Claim 11, characterized in that said retaining means comprise snap-on retaining means (103, 104) for mutually connecting said half shells (101).

13. A device as claimed in Claim 11 or 12 dependent on Claim 4, characterized in that said half shells define a number of longitudinal inner grooves (107) engaged in sliding manner by said ribs (21) on said rod (14) of said control lever (5).

14. A device as claimed in any one of the foregoing Claims from 11 to 13, characterized in that said control element (55) comprises an annular operating collar (108) close to said grip (15) of said control lever (5).

15. A device as claimed in any one of the foregoing Claims, characterized in that said control element (55) comprises a pair of bottom lateral appendixes (76, 77); said disabling assembly (54) comprising a return spring (80) secured to said control lever (5) and presenting a pair of arms (83) cooperating with said appendixes (76, 77) to restore said control element (55) to said disabling position.

16. A device as claimed in Claim 15, characterized in that said stop portion of said control element (55) comprises one (76) of said appendixes (76, 77).

17. A device as claimed in any one of the foregoing Claims, characterized in that said supporting means comprise a support (2) fitted to said vehicle body (3); and an intermediate element (4) hinged to said support (2) about a first axis (A); said control lever (5) being hinged to said intermediate element (4) about a second axis (B) perpendicular to said first axis (A).

18. A device as claimed in Claim 17, characterized in that said support (2) and said intermediate element (4) are made of plastic material.
